# EUROPEAN PATENT SPECIFICATION

(11) **EP 2 603 310 B1**
(45) Date of publication and mention of the grant of the patent: **15.12.2021**
(21) Application number: 11816660.2
(22) Date of filing: 12.08.2011
(51) Int. Cl.: B01D 67/00, B01D 69/12, H01M 50/414, H01M 50/426, H01M 50/446, H01M 50/449

(54) **PORE PROTECTED MULTI LAYERED COMPOSITE SEPARATOR AND THE METHOD FOR MANUFACTURING THE SAME**
MEHRSCHICHTIGER VERBUNDSEPARATOR MIT PORENSCHUTZ UND HERSTELLUNGSVERFAHREN DAFÜR
SÉPARATEUR COMPOSITE MULTICOUCHE À PORES PROTÉGÉS ET SON PROCÉDÉ DE FABRICATION

(30) Priority: 13.08.2010 KR 20100078107
(43) Date of publication of application: 19.06.2013
(73) Proprietor: SK Innovation Co., Ltd., Seoul 110-110 (KR); SK ie technology Co., Ltd., Jongno-gu Seoul 03188 (KR)
(72) Inventor: JOO, Dong Jin, Daejeon 305-761 (KR); RHEE, Jang Weon, Daejeon 302-120 (KR); SUNG, Jung Moon, Seoul 143-769 (KR); LEE, Je An, Daejeon 306-777 (KR); KIM, Yong Kyoung, Daejeon 305-744 (KR)
(74) Representative: Stolmár & Partner Patentanwälte PartG mbB
(86) International application number: PCT/KR2011/005978
(87) International publication number: WO 2012/021044

(56) References cited:
- WO-A1-2009/041394
- JP-A- 2001 023 602
- KR-B1- 100 544 516
- US-A- 4 824 568
- US-A1- 2006 003 209
- US-A1- 2006 003 215
- US-A1- 2006 079 392
- US-A1- 2007 196 714
- None

## Description

### [Technical Field]

The present invention relates to an improved method applicable for manufacturing a separator for a secondary battery and various composite porous separators and, more particularly, to a manufacturing method enabling improvement in performance and safety of the composite porous separator, as well as a composite porous separator manufactured by the foregoing manufacturing method.

### [Background Art]

Recently, with the advancement of IT industries, electric/electronic mobile equipment markets such as notebook computers, mobile phones or the like, have considerably grown. Further, interest and investment in green energy, such as the development of electric vehicles, have rapidly increased. In respect of development of mobile equipment and/or electric vehicles, batteries have an important role as an energy storage source and, especially among them, studies and development into a lithium secondary battery have greatly attracted attention in the related art. A lithium secondary battery is generally manufactured using a separator made of a microporous film as well as a positive electrode ('a cathode') and a negative electrode ('an anode') wherein the separator is mostly formed using polyolefin.

The lithium secondary battery was first developed in the early 1990's and, compared to batteries known in the related art, has excellent performances such as energy density, output power, etc., thus being in the spotlight. However, due to use of an organic electrolyte, the foregoing battery may cause safety-related problems such as explosion or ignition under abnormal conditions, for example, overcharge, short-circuit, or the like.

In order to overcome such safety-related problems under abnormal conditions described above, a separator may have a shutdown function and, here, the shutdown function is that, when a battery is overheated, polyolefin as the material used as the separator is fused and clogs pores in the separator to block movement of lithium ions, which in turn, controls electro-chemical reaction thereof. The temperature at which shutdown occurs, is referred to as a shutdown temperature, which is an important characteristic of the separator. In general, if the shutdown temperature is lowered, the separator may be considered to have better safety. However, if the battery encounters abnormal overheating and the shutdown temperature continuously raises above a melting point of polyolefin even after shutdown, the separator may meltdown and break, causing direct contact between a cathode and an anode, which in turn, may cause a short-circuit and ultimately an explosion/ignition. For electric vehicles provided with high capacity batteries in large numbers, safety requirements are significantly high. In order to satisfy such requirements, disclosed is a multi-layer composite separator manufactured by mixing a polymer binder and inorganic particles and applying the mixture to the surface of a polyolefin separator (Korean Patent No. 0332678; and US Patent No. 6432586). This separator has a layer containing a polymer binder and an inorganic material (referred to as 'the polymer binder and inorganic layer'), which functions as an insulating layer and is continuously retained even at a thermal-fusion temperature of the separator or higher, to thereby prevent direct contact between the cathode and the anode and further occurrence of short-circuits due to the direct contact.

However, the separator coated with the polymer binder and inorganic layer has a problem in that a solution containing the polymer binder is sucked into pores of the separator due to a capillary phenomenon and clogs the pores present on the surface or inside the (polyolefin) separator used as a substrate during the preparation thereof, thus considerably degrading permeability. For this reason, the shutdown function to clog the pores at the shutdown temperature is inhibited by the polymer binder present in the pores, which in turn, causes additional problems such as an increase in the shutdown temperature to a melting temperature of the polymer binder, interference with the shutdown, or the like.

Moreover, in order to solve a pore clogging problem by the polymer binder during coating, a process has been proposed for manufacturing a polyolefin separator that includes: applying a solution comprising a polymer binder and an inorganic material to a sheet type body containing a polyolefin resin and a plasticizer; and extracting the plasticizer, before an extraction process in the foregoing manufacturing method (Japanese Laid-Open Patent Publication No. 2007-273443). Although the above method may prevent clogging of the pores by the polymer binder sucked thereinto, the polymer binder and inorganic layer may be partially dissolved by an extracting solvent, in addition to the plasticizer, while extracting the plasticizer. For this reason, the inorganic material laminated in the layer may be delaminated or the layer may be damaged, thus causing a problem of layer irregularities. JP 2001-023602 A discloses a method for manufacturing a multi-layer composite porous film useful as secondary battery separator, the method including coating a heat resistant resin solution on the porous film and impregnating an organic solvent in the porous film before and after the heat resistant resin solution is coated thereon. US 4,824,568 A discloses a method for forming a composite membrane suitable for ultrafiltration, the method including casting a solution of polymer dissolved in a solvent onto a preformed microporous membrane and thereafter precipitating the polymer to form the composite membrane thereon.

### [Disclosure]

### [Technical Problem]

As a result of intensive and extensive studies to solve the above problems in the related art, the present inventors have found that, if a coating process including: applying a solvent to the surface of a polyolefin microporous film to fill pores formed thereon, before application of a coating solution to the surface of the polyolefin microporous polyolefin film; applying the foregoing coating solution, which contains a polymer binder and inorganic particles, to the foregoing polyolefin film, before the solvent is dried; and then, drying the coating solution (applied to the film) as well as the solvent, is employed, it is possible to prevent the polymer binder from clogging the pores due to a capillary phenomenon. In addition, it was found that the foregoing method has advantages in that the coating layer is not either delaminated (or detached) by the extracting solvent or damaged, since the foregoing method does not need an extracting process after coating.

Therefore, an object of the present invention is to provide a multi-layer composite separator with advantages such as non clogging pores, and excellent permeability and shutdown function, which are accomplished by adopting an improved coating process.

### [Technical Solution]

In order to overcome the foregoing objects, the present invention provides a method for manufacturing a multi-layer composite porous film according to claim 1, the method including:
(a) selecting a microporous film substrate;
(b) preparing a coating solution which contains a polymer resin, or the polymer resin and inorganic particles;
(c) applying a solvent having a boiling point of 35 to 250°C to at least one face of the microporous film substrate to fill and protect pores of the microporous film;
(d) applying the coating solution prepared in operation (b) to the microporous film, of which the pores are filled and protected, before drying the solvent filling the pores; and
(e) removing the solvent filling the pores and the solvent contained in the coating solution by drying, to thereby manufacture a multi-layer composite porous film having a porous coating layer formed thereon,
wherein the polymer resin is selected from polyarylate and poly(vinylidene difluoride-hexafluoropropylene) and has a melting point of 150°C or higher, characterized in that, when the polymer resin is selected from polyarylate, the solvent for filling the pores in operation (c) is carbon tetrachloride (CCl₄) and the solvent for preparing the coating solution in operation (b) is chloroform; and when the polymer resin is selected from poly(vinylidene difluoride-hexafluoropropylene), the solvent for filling the pores in operation (c) is selected from tetrahydrofuran (THF) and methylethylketone (MEK), and the solvent for preparing the coating solution in operation (b) is tetrahydrofuran (THF).

Hereinafter, the present invention will be described in detail.

A polyolefin microporous film substrate used herein may comprise polyolefin such as polyethylene or polypropylene, as a major component. Here, the major component means one of which a ratio of a polyolefin resin is the highest value, among resin components to form the microporous film substrate. In the case where the microporous film substrate of the present invention is used as a separator for a secondary battery, in view of a shutdown function, the polyolefin may range 50 to 100% of a mass of the resin components to form the microporous film and, more preferably, range from 70 to 100%. The reason for this is that, if the ratio of the polyolefin resin is too small, the shutdown function may not be sufficiently expressed.

As the major component of the polyolefin microporous film substrate, polyethylene or polypropylene may be used alone or as a combination thereof. If the combination is used, as a content of polypropylene is higher, thermal resistance of the microporous film may be much improved. However, if the content of polypropylene is too high, the thermal fusion temperature of the resin component may rise, causing excessively increase in shutdown temperature or insufficiently express in the shutdown function. Accordingly, a ratio of polypropylene among polyolefin may range from 0 to 10% by mass, without being particularly limited thereto.

In addition, the polyolefin microporous film substrate of the present invention may be a multi-layer microporous film comprising of different constitutional components in respective layers, in addition to a singe layer microporous film including polyolefin as the major component. More particularly, a separator having at least two layers, one of which includes polyethylene or polyphylene as a major component may be used. As an example, a three-layered microporous film including a surface layer formed of propylene and an inner layer formed of polyethylene may be used.

The polyolefin microporous film substrate is manufactured to have numerous pores inside the film and, according to the size, number and/or channel of the pore, the permeability of the microporous film may be determined. When the polyolefin microporous film is used as a separator for a secondary battery, the pore size may generally range from 0.001 to 1.0 µm. The permeability (Gurley value) of the microporous film substrate is represented by air permeability, which is defined by a time required to pass 100cc of air through the separator, and may range from 50 to 1000sec/100cc.

The coating solution used herein may be prepared by dissolving a polymer binder in a coating solvent and introducing inorganic particles into the solution or, otherwise, by simultaneously introducing the polymer binder and the inorganic particles to the solvent and agitating the same.

The polymer binder is a polymer resin that has a melting temperature or glass transition temperature of 150°C or higher, which is higher than a melting temperature of the polyolefin microporous film substrate, and that is electro-chemically stable and not soluble in an electrolyte. The polymer resin is selected from polyarylate and poly(vinylidene difluoride-hexafluoropropylene).

When using the polymer resin to form a porous coating layer for the microporous film substrate, the polymer resin may be used alone or as a mixture of two or more thereof or, otherwise, the polymer resin may be used alone without inorganic particles.

The inorganic particles may include typical inorganic particles, more preferably, having high electrical insulation and electro-chemical stability. Examples of the inorganic particles may include calcium carbonate, alumina, aluminum hydroxide, silica, barium titanium oxide, magnesium oxide, magnesium hydroxide, talc, clay, titanium oxide, or the like, which may be used alone or as a mixture of two or more thereof, without being particularly limited thereto.

The size of each inorganic particle is not particularly limited but may generally range from 0.01 to 10 µm. If a small particle having a size of less than 0.01 µm is used, it is difficult to ensure favorable particle dispersivity, thus causing non-uniformity in a thickness of a porous layer and physical properties thereof. When using a large particle having a size of more than 10 µm, the porous layer is considerably thick relative to the polyolefin microporous film used as a substrate, thus causing disadvantages such as degradation in mechanical properties and difficulty in the manufacture of a thin separator.

The multi-layer composite porous film means a porous film having a multi-layer structure wherein a coating solution containing a polymer resin or the polymer resin and inorganic particles is applied to the surface of a polyolefin microporous film substrate. Since the porous film having a multi-layer structure is used for the manufacturing method in the present invention, it is possible to prevent shrinkage or fusion of a separator and, thus, ignition and/or explosion of a battery due to the same, because the foregoing problems are caused in the case where the battery is overheated to a higher temperature than a melting temperature of the polyolefin resin, which is a microporous film substrate as a major component of the separator. Moreover, by forming a porous coating layer in a laminate form comprising a mixture of the polymer resin and inorganic particles, heat-shrinkage of the separator due to inter-bonding of the inorganic particles may be reduced and, even at the temperature higher than the melting temperature of the polymer resin or polyolefin, contact between a cathode and an anode in the battery may be effectively prevented.

The present invention further includes an operation of filling (or clogging) pores of the microporous film substrate by impregnating or coating at least one face of the microporous film substrate with a solvent having a boiling point of 30 to 250°C or less. This operation allows the pores to be protected by further operation of applying a coating solution to the film, to thereby prevent a decrease in permeability.

The reason for firstly filling the pores with the solvent, before formation of the porous coating layer, is to prevent the decrease in permeability and degradation in the shutdown function, wherein both of the permeability and the shutdown function are important characteristics of the separator, and wherein the foregoing effects (of decreasing the permeability and degrading the shutdown function) are caused by the coating solution charged into the pores through a capillary phenomenon when applying the coating solution to the surface of the substrate.

Moreover, the coating solution is applied earlier to the surface than the solvent charged into the pores, which in turn, is first dried before the solvent during drying. Accordingly, compared to the case where the pores of the microporous film substrate are not preliminarily filled with the solvent, the pores filled with the solvent may show considerably reduced penetration of the coating solution into the pores. Consequently, a final product, that is, the multi-layer composite porous film does not have closed pores, thereby retaining its initial permeability.

If the solvent filling the pores has a boiling point of less than 30°C, the boiling point is too low and the solvent is rapidly dried, thus making it difficult to maintain the pores in such a filled state until the coating solution is applied thereto. On the contrary, when the boiling point of the solvent exceeds 250°C, it is difficult to dry the solvent after applying the coating solution, which in turn, causes difficulties in returning the solvent-filled pores into an empty condition, thereby being not preferable. Practical examples of the solvent for protection of pores in the microporous film substrate may include, particularly but not limited to; pentane, methylene chloride, carbon disulfide, cyclopenetane, methyl tert-butylether (MTBE), acetone, chloroform, methanol, tetrahydrofuran (THF) (according to the invention), n-hexane, trifluoroacetic acid, carbon tetrachloride (CCl₄) (according to the invention), ethyl acetate, ethanol, methylethylketone (MEK) (according to the invention), benzene, cyclohexane, acetonitrile, iso-propanol, tert-butanol, ethylene dichloride, hydrochloric acid, n-propanol, heptane, distilled water, dioxane, formic acid, iso-butanol, toluene, pyridine, n-butanol, acetic acid, ethylene bromide, chlorobenzene, acetic acid anhydride, xylene, dimethyl formamide, bromobenzene, dimethyl acetamide, phenol, aniline, dimethyl sulfoxide, ethyleneglycol, camphor or N-methlyl-2-pyrrolidone (NMP).

In an exemplary embodiment, the solvent is characterized in that a solubility of the polymer binder in a solvent for filling pores is lower than a solubility of the polymer binder in another solvent used for a coating solution.

Moreover, the solvent used in operation (c) described above may have solubility defined by the following equation [Equation 1] lower than solubility of the solvent used for the coating solution in operation (b).

### [Equation 1]

Solubility of solvent to polymer binder (%) = (initial weight - weight after dissolution)/initial weight The reason for the above fact is that, as the solubility of the solvent for filling the pores to the polymer binder is decreased, diffusion possibility of the polymer binder into the pores may be reduced in a following operation to form a porous coating layer. If the solvent for filling the pores has higher solubility than that of the solvent used for the coating solution further being applied, the diffusion of the polymer binder into the pores may be rapidly conducted and the polymer binder may remain in the pores after drying of the solvent, and the polymer binder in the pores leads to degradation in the permeability and shutdown characteristics and ultimately deterioration in performance and safety of a battery.

However, even where the pores are filled with the solvent having higher solubility to the polymer binder than the solvent used for the coating solution, the capillary phenomenon is relatively less than that of empty pores, to thereby enable protection of the pores. Accordingly, the solvent for pore protection may be suitably selected, without being particularly limited thereto.

The present invention further includes application of the coating solution prepared in operation (b) to the pore-filled and protected microporous film.

The application method of the coating solution ('coating process') is not particularly limited so long as it provides a desired thickness of the porous layer by controlling an amount or a speed of application to one side or both sides of the film, which are pore-protected, and the coating process may include, for example, die coating, dip coating, gravure coating, gamma-roll coating, reverse-roll coating, transfer-roll coating, knife coating, blade coating, rod coating, squeeze coating, cast coating, spraying, or the like.

According to the present invention, the solvent filling the pores as well as the solvent contained in the coating solution are removed by drying, resulting in a multi-layer composite porous film having the porous coating layer formed thereon.

Processes of removing the solvent that fills the pores as well as the solvent contained in the coated porous layer, are substantially the same and are not particularly limited so long as they do not damage the coating layer. In this regard, practical examples of the removal process may include ambient drying of the solvent at a temperature lower than a melting temperature of the solvent, vacuum drying at a low temperature, or the like.

In addition, the present invention provides a method for manufacturing a multi-layer composite porous film having a permeability ratio of [a Gurley value after removal of a coating layer]/(a Gurley value of a substrate)x100, of about 200% or less.

In order to examine pore protection effects in detail, the following two different porous films, that is: a composite multi-layer porous film manufactured by applying a coating solution to a microporous film substrate without filling pores of the substrate, and then, drying the coated film substrate to form a porous layer; and a composite multi-layer porous film manufactured by, after filling the pores of a microporous film substrate using a solvent, applying a coating solution to the film and drying the same to form a porous layer, may be subjected to Gurley value measurement after removal of the applied porous coating layer. Following this, the measured Gurley value may be compared to a Gurley value of a polyolefin microporous film which was used as a substrate, to thereby identify excellent characteristics of the multi-layer composite porous film according to the present invention. In this regard, the permeability before removing the coating layer means a permeability of the microporous film used as the substrate as well as the coating layer, while the permeability after removing the coating layer refers to a permeability of the microporous film used as a substrate and an interface between the corresponding microporous film and the coating layer. Therefore, if using the same substrate, a high permeability after removing the coating layer substantially means high permeability at the interface between the substrate and the coating layer, that is, demonstrating that pore clogging at the interface due to a polymer resin contained in a coating solution is relatively reduced, in the case where a coating layer is formed.

As the permeability ratio of [a Gurley value after removal of a coating layer]/(a Gurley value of a substrate) is increased, it means the pore clogging at the interface during application of the coating solution is more significant. On the contrary, if the permeability ratio is decreased, the pore clogging at the interface during application of the coating solution may be reduced. Therefore, the permeability ratio may be suitably decreased but, more preferably, about 200% or less. If the permeability ratio exceeds 200%, this is not much different from that obtained where the coating solution is applied without filling the pores. The reason for this is that pore protection using a solvent was not sufficiently achieved.

The multi-layer composite porous film manufactured according to the foregoing may be used for electro-chemical devices, more particularly, as a separator for a lithium secondary battery. Specifically, because of excellent permeability and shutdown characteristics, the foregoing porous film may be used in manufacturing batteries with high performance and safety.

### [Advantageous Effects]

According to the present invention, a multi-layer composite porous film having excellent permeability and shutdown function may be manufactured by applying a polymer binder and inorganic layer without clogging pores of the film. In addition, using the foregoing manufactured film, a battery having excellent performance and high safety may be successfully manufactured.

### [Description of Drawings]

The above and other objects, features and advantages of the present invention will become apparent from the following description of preferred embodiments given in conjunction with the accompanying drawings, in which:

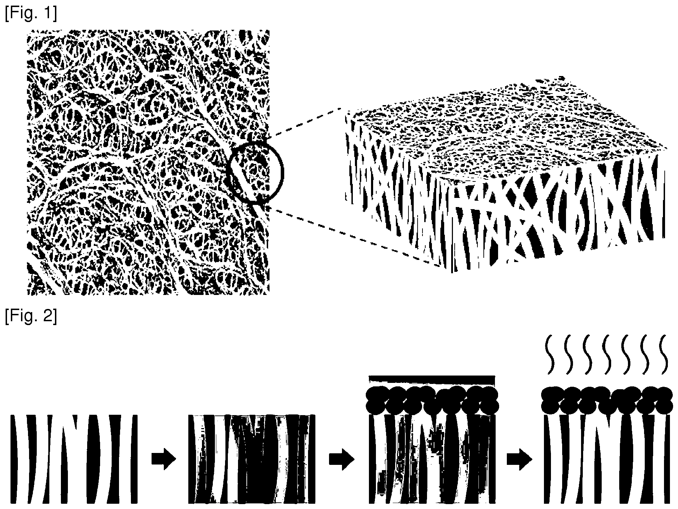

FIG. 1 shows an electron micrograph (magnified 200 times) of the surface of a polyolefin microporous film used as a substrate in the present invention; and
FIG. 2 is a conceptive drawing illustrating respective processes of a manufacturing method according to the present invention, wherein pores of the polyolefin microporous film substrate shown in FIG. 1 are first filled with a solvent, followed by applying a solution, which contains a polymer resin or the polymer resin and inorganic particles, to the surface of the substrate before drying the solvent, and then, drying the coated substrate.

### [Best Mode]

Hereinafter, preferred embodiments of the present invention will be described in detail with reference to the following examples, however, such embodiments are not the scope of the present invention nor particularly limited thereto.

A variety of characteristics of the multi-layer composite porous film according to the present invention has been evaluated by the following test methods.

### [1] Film thickness

A contact type thickness gauge with a thickness accuracy of 0.1 µm was used.

### [2] Gas permeability (Gurley value)

Using a typical Gurley densometer, a time when 100cc air passes through a film was measured. A Gurley value is generally reduced with higher permeability while, if the permeability is lower, the Gurley value may be increased. In addition, the gas permeability after removal of a coating layer was measured by first preparing the coating layer, attaching a general cellophane adhesive tape to a coated face of the film then detaching the tape to remove the coating layer, and measuring the permeability using the Gurley densometer.

### [3] Shutdown temperature

The shutdown temperature of a multi-layer composite porous film was measured in a provisional (or small-scale) cell, on which impedance may be measured. The provisional cell was arranged by placing the multi-layer composite porous film between two graphite electrodes and injecting an electrolyte into them. While raising a temperature from 25 to 200°C at 5°C/min with 1kHz alternate current (A.C.), electric resistivity was measured. Here, the temperature on a point, at which the electric resistivity is sharply increased to several hundreds to several thousands Ω or more, was defined as the shutdown temperature. The electrolyte used for measurement was 1 molar concentration (that is, 1M) lithium hexafluorophosphate (LiPF6) dissolved in a solution comprising ethylene carbonate and propylene carbonate in a ratio of 1:1.

### [4] Solubility (to polymer resin)

Using a compression molding machine, a polymer resin specimen in a square shape having a thickness of 2.5mm and each side of 40mm was prepared. After perforating the center of the specimen to form a hole having a diameter of 3mm, the specimen was weighed, and provided on a mechanical stirrer by replacing an impeller of the stirrer with the specimen. After filling a container with 500ml of a solvent which is subjected to measurement of solubility, the container was furnished with the mechanical stirrer having the polymer resin specimen provided thereon. Then, the polymer resin specimen was treated to be completely dipped in the solution and dissolved in the solution via rotation at 500 rpm and 1 hour. After completely dissolving while rotating, the polymer resin specimen remaining without being dissolved in the solvent was isolated from the mechanical stirrer, followed by drying the isolated specimen in a vacuum oven at 100°C for 24 hours to completely remove the solvent and then weighing the remaining portion. Comparing an initially measured weight of the specimen with a weight of the specimen measured after rotation, a solubility of the solvent to the polymer resin was estimated.

### [Equation 1]

### Solubility of the solvent to the polymer binder (%) = (initial weight - weight after dissolution)/initial weight

### [EXAMPLE 1]

### (1) Selection of a substrate

A polyolefin microporous film used as a substrate was a separator for a secondary battery composed of a polyethylene single layer and having a thickness of 11.9 µm and a permeability of 141 sec/100cc.

### (2) Preparation of a coating solution

23g of a poly(vinylidene difluoride-hexafluoropropylene) (PVdF-HFP) polymer resin (a weight average molecular weight = 450,000) was dissolved in 522g of THF to prepare a solution with a concentration of 4.22wt%, and 37.0g of alumina (Al₂O₃) (average diameter = 0.5 µm) was introduced to this polymer solution and agitated to prepare a coating solution in a ratio (by mass) of (inorganic particles)/(polymer resin) = 1.61.

### (3) Pore protection by a solvent

A die coating process that passes a THF solvent, which has a solubility of 14.7% to the PVdF-HFP polymer resin, through a slot die toward a cross-section of the separator substrate to coat the substrate, was implemented to apply the THF solvent to one face of the substrate, thus enabling penetration of the solvent into the pores and ultimately filling the pores.

### (4) Application of the coating solution

After filling the pores with the solvent using the slot die, the coating solution passed through the slot die to coat the substrate by die coating, to thereby apply the coating solution to the one face of the substrate, resulting in a multi-layer composite porous film.

### (5) Drying of a coated multi-layer composite porous film

In order to remove the THF solvent used for the coating solution as well as the THF solvent filling the pores, the completely coated multi-layer composite porous film was dried at 40°C under an ambient pressure condition.

### (Experimental conditions of Example 1 and results obtained under the same are shown in Table 1)

### [EXAMPLE 2]

### (1) Selection of a substrate

A polyolefin microporous film used as a substrate was a separator for a secondary battery composed of a polyethylene single layer and having a thickness of 12.3 µm and a permeability of 141 sec/100cc.

### (2) Preparation of a coating solution

23g of a PVdF-HFP polymer resin (a weight average molecular weight = 450,000) was dissolved in 522g of THF to prepare a solution with a concentration of 4.22wt%, and 36.3g of alumina (Al₂O₃) (an average diameter = 0.5 µm) was introduced to this polymer solution and agitated to prepare a coating solution in a ratio (by mass) of (inorganic particles)/(polymer resin) = 1.58.

### (3) Pore protection by a solvent

A dip coating process that includes dipping the separator substrate in a bath including a methylethylketone (MEK) solvent, which has a solubility of 5.1% to the PVdF-HFP polymer resin, taking the substrate out of the bath, and removing the solvent that remains on the surface of the substrate using a Meyer bar, was implemented to apply the MEK solvent to both faces of the substrate, thus enabling penetration of the solvent into the pores and ultimately filling the pores.

### (4) Application of the coating solution

After filling the pores with the solvent via dip coating, the dip coating process was again performed by dipping the substrate in a bath including a coating solution then taking the same out of the bath, followed by removing the coating solution that remains on the surface of the substrate using the Meyer bar, to thereby apply the coating solution to both faces of the substrate, resulting in a multi-layer composite porous film.

### (5) Drying of a coated multi-layer composite porous film

In order to remove the THF solvent used for the coating solution as well as the MEK solvent filling the pores, the completely coated multi-layer composite porous film was dried at 40°C under an ambient pressure condition.

### (Experimental conditions of Example 2 and results obtained under the same are shown in Table 1)

### [EXAMPLE 3]

### (1) Selection of a substrate

A polyolefin microporous film used as a substrate was a separator for a secondary battery composed of a polyethylene single layer containing 5% of polypropylene and having a thickness of 9.3 µm and a permeability of 160 sec/100cc.

### (2) Preparation of a coating solution

16g of a polyarylate (PAR) polymer resin (a weight average molecular weight = 61,000) was dissolved in 519g of chloroform (CHCl₃) to prepare a solution with a concentration of 2.99wt%, and 64g of titanium dioxide (TiO₂)(an average diameter = 0.5 µm) as an inorganic material was introduced to this polymer solution to prepare a coating solution in a ratio (by mass) of (inorganic particles)/(polymer resin) = 4.00.

### (3) Pore protection by a solvent

A dip coating process that includes dipping the separator substrate in a bath including a carbon tetrachloride (CCl₄) solvent, which has a solubility of 2.7% to the PAR polymer resin, taking the substrate out of the bath, and removing the solvent that remains on the surface of the substrate using a Meyer bar, was implemented to apply the CCl₄ solvent to both faces of the substrate, thus enabling penetration of the solvent into the pores and ultimately filling the pores.

### (4) Application of the coating solution

After filling the pores with the CCl₄ solvent via dip coating, the dip coating process was again performed by dipping the substrate in a bath including a coating solution then taking the same out of the bath, followed by removing the coating solution remaining on the surface of the substrate using the Meyer bar, to thereby apply the coating solution to both faces of the substrate, resulting in a multi-layer composite porous film.

### (5) Drying of a coated multi-layer composite porous film

In order to remove the chloroform solvent used for the coating solution as well as the CCl₄ solvent filling the pores, the completely coated multi-layer composite porous film was dried at 40°C under an ambient pressure condition.

### (Experimental conditions of Example 3 and results obtained under the same are shown in Table 1)

### [COMPARATIVE EXAMPLE 1]

### (1) Selection of a substrate

A polyolefin microporous film used as a substrate was a separator for a secondary battery composed of a polyethylene single layer and having a thickness of 11.8 µm and a permeability of 140 sec/100cc.

### (2) Preparation of a coating solution

23g of a PVdF-HFP polymer resin (a weight average molecular weight = 450,000) was dissolved in 522g of THF to prepare a solution with a concentration of 4.22wt%, and 36.8g of calcium carbonate (CaCO3) (an average diameter = 0.5 µm) was introduced to this polymer solution and agitated to prepare a coating solution in a ratio (by mass) of (inorganic particles)/(polymer resin) = 1.60.

### (3) Application of the coating solution

A die coating process that passes the coating solution through a slot die to coat the substrate, was implemented to apply the THF solvent to one face of the substrate, thus manufacturing a multi-layer composite porous film.

### (4) Drying of a coated multi-layer composite porous film

In order to remove the THF solvent used for the coating solution, the completely coated multi-layer composite porous film was dried at 40°C under an ambient pressure condition.

### (Experimental conditions of Comparative Example 1 and results obtained under the same are shown in Table 1)

### [COMPARATIVE EXAMPLE 2]

### (1) Selection of a substrate

A polyolefin microporous film used as a substrate was a separator for a secondary battery composed of a polyethylene single layer and having a thickness of 12.0 µm and a permeability of 142 sec/100cc.

### (2) Preparation of a coating solution

23g of a PVdF-HFP polymer resin (a weight average molecular weight = 450,000) was dissolved in 522g of THF to prepare a solution with a concentration of 4.22wt%, and 36.8g of alumina (Al₂O₃) (average diameter = 0.5 µm) was introduced to this polymer solution and agitated to prepare a coating solution in a ratio (by mass) of (inorganic particles)/(polymer resin) = 1.60.

### (3) Pore protection by a solvent

A dip coating process that includes dipping the separator substrate in a bath including an N-methyl-2-pyrrolidone (NMP) solvent, which has a solubility of 67.7% to the PVdF-HFP polymer resin, taking the substrate out of the bath, and removing the solvent that remains on the surface of the substrate using a Meyer bar, was implemented to apply the NMP solvent to both faces of the substrate, thus enabling penetration of the solvent into the pores and ultimately filling the pores.

### (4) Application of the coating solution

After filling the pores with the NMP solvent via dip coating, the dip coating process was again performed by dipping the substrate in a bath including the coating solution then taking the same out of the bath, followed by removing the coating solution that remains on the surface of the substrate using the Meyer bar, to thereby apply the coating solution to both faces of the substrate, resulting in a multi-layer composite porous film.

### (5) Drying of a coated multi-layer composite porous film

In order to remove the THF solvent used for the coating solution as well as the NMP solvent filling the pores, the completely coated multi-layer composite porous film was dried at 40°C under an ambient pressure condition.

### (Experimental conditions of Comparative Example 2 and results obtained under the same are shown in Table 1)

### [COMPARATIVE EXAMPLE 3]

### (1) Selection of substrate

A polyolefin microporous film used as a substrate was a separator for a secondary battery composed of a polyethylene single layer and having a thickness of 11.5 µm and a permeability of 145 sec/100cc.

### (2) Preparation of coating solution

23g of a PVdF-HFP polymer resin (a weight average molecular weight = 450,000) was dissolved in 522g of THF to prepare a solution with a concentration of 4.22wt%, and 37.0g of alumina (Al₂O₃) (an average diameter = 0.5 µm) was introduced to this polymer solution and agitated to prepare a coating solution in a ratio (by mass) of (inorganic particles)/(polymer resin) = 1.61.

### (3) Pore protection by a solvent

A dip coating process that includes dipping the separator substrate in a bath including a CCl₄ solvent, which has a solubility of 0.4% to the PVdF-HFP polymer resin, taking the substrate out of the bath, and removing the solvent that remains on the surface of the substrate using a Meyer bar, was implemented to apply the CCl₄ solvent to both faces of the substrate, thus enabling penetration of the solvent into the pores and ultimately filling the pores.

### (4) Application of the coating solution

After filling the pores with the CCl₄ solvent via dip coating, the CCl₄ portion filling the pores was completely dried by leaving the substrate under the conditions of 40°C and ambient pressure for 10 minutes. Then, the dip coating process was again performed by dipping the substrate in a bath including the coating solution then taking the same out of the bath, followed by removing the coating solution that remains on the surface of the substrate using the Meyer bar, to thereby apply the coating solution to both faces of the substrate, resulting in a multi-layer composite porous film.

### (5) Drying of a coated multi-layer composite porous film

In order to remove the THF solvent used for the coating solution, the completely coated multi-layer composite porous film was dried at 40°C under an ambient pressure condition.

### (Experimental conditions of Comparative Example 3 and results obtained under the same are shown in Table 1)

### [COMPARATIVE EXAMPLE 4]

### (1) Selection of a substrate

A polyolefin microporous film used as a substrate was a separator for a secondary battery composed of a polyethylene single layer and having a thickness of 12.5 µm and a permeability of 145 sec/100cc.

### (2) Preparation of a coating solution

16g of a PAR polymer resin (a weight average molecular weight = 61,000) was dissolved in 519g of THF to prepare a solution with a concentration of 2.99wt%, and 64g TiO₂ (an average diameter = 0.5 µm) as an inorganic material was introduced to this polymer solution to prepare a coating solution in a ratio (by mass) of (inorganic particles)/(polymer resin) = 4.00.

### (3) Pore protection by a solvent

A dip coating process that includes dipping the separator substrate in a bath including liquid paraffin (DAE-JUNG Chemical and Metal, white mineral oil, boiling point=302°C), which has a solubility of 0.0% to the PAR polymer resin, taking the substrate out of the bath, and removing the liquid paraffin that remains on the surface of the substrate using a Meyer bar, was implemented to apply the liquid paraffin to both faces of the substrate, thus enabling penetration of the liquid paraffin into the pores and ultimately filling the pores.

### (4) Application of the coating solution

After filling the pores with the liquid paraffin via dip coating, the dip coating process was again performed by dipping the substrate in a bath including the coating solution then taking the same out of the bath, followed by removing the coating solution that remains on the surface of the substrate using the Meyer bar, to thereby apply the coating solution to both faces of the substrate, resulting in a multi-layer composite porous film.

### (5) Drying of coated multi-layer composite porous film

In order to remove the THF solvent used for the coating solution as well as the liquid paraffin filling the pores, the completely coated multi-layer composite porous film was dried at 40°C under an ambient pressure condition.

### (Experimental conditions of Comparative Example 4 and results obtained under the same are shown in Table 1)

**[TABLE 1]**

| | Item | Unit | Ex. 1 | Ex. 2 | Ex. 3 | Com. Ex. 1 | Com. Ex. 2 | Com. Ex. 3 | Com. Ex. 4 |
|---|---|---|---|---|---|---|---|---|---|
| Sub str ate | Major component | - | PE | PE | PE-PP (5%) | PE | PE | PE | PE |
| | Layer configurati on | - | Single layer | Single layer | Single layer | Single layer | Single layer | Single layer | Single layer |
| | Thickness | *µ*m | 11.9 | 12.3 | 9.3 | 11.8 | 11.8 | 11.5 | 12.5 |
| | Permeabili ty (Gurley value) | Sec/ 100c c | 141 | 141 | 160 | 140 | 140 | 145 | 145 |
| | Shutdown temperatur e | °C | 138 | 138 | 136 | 138 | 138 | 138 | 137 |
| Sol ven t for por e pro tec tio n | Pore protecting solvent | - | THF | MEK | CC14 | No use | NMP | CC14 | Liquid paraffi n |
| | Boiling temperatur e | °C | 66 | 80 | 77 | | 204 | 77 | 302 |
| | Solubility (to applied polymer resin) | % | 14.7 | 5.1 | 2.7 | | 67.7 | 0.4 | 0.0 |
| | Coating process | - | Die | Dip | Dip | | Dip | Dip | Dip |
| | Coated face | | One | Both | Both | | Both | Both | Both |
| Co atin g sol uti on | Solvent for coating solution | - | THF | THF | CHCl3 | THF | THF | THF | CHCl3 |
| | Boiling point | °C | 65 | 66 | 61 | 66 | 66 | 66 | 61 |
| | Solubility (to applied polymer resin) | % | 14.7 | 14.7 | 78.7 | 14.7 | 14.7 | 14.7 | 78.7 |
| | Inorganic material | - | Al2O3 | Al2O3 | TiO2 | CaCO2 | Al2O3 | Al2O3 | TiO2 |
| | Polymer resin | - | PVdF-HFP | PVdF-HFP | PAR | PVdF-HFP | PVdF-HFP | PVdF-HFP | PAR |
| | Ratio(by mass) of (inorganic material)/( polymer resin) | - | 1.61 | 1.58 | 4.00 | 1.60 | 1.52 | 1.61 | 4.00 |
| | Coating | - | Die | Die | Dip | Die | Dip | Dip | Dip |
| | process of coating solution | | | | | | | | |
| | Coated face with coating solution | - | One | Both | Both | One | Both | Both | Both |
| Mul ti-lay er co mp osit e por ous fil m | Thickness of coating layer | *µ*m | 4.4 | 4.5 | 4.3 | 4.5 | 4.6 | 4.7 | No formati on of coating layer |
| | Permeabili ty (Gurley value) | Sec/ 100c c | 321 | 259 | 291 | 448 | 423 | 451 | |
| | Permeabili ty after removal of coating layer (Gurley value) | Sec/ 100c c | 214 | 148 | 197 | 395 | 307 | 402 | |
| | Permeabili ty ratio (Gurley)* | % | 152% | 105% | 123% | 282% | 219% | 277% | |
| | Shutdown temperatur e | °C | 141 | 139 | 137 | 145 | 143 | 144 | |

| | | | | | | | | | |
|---|---|---|---|---|---|---|---|---|---|
| (*) Permeability ratio (a Gurley value) = [a Gurley value after removal of a coating layer]/[a Gurley value of a substrate]×100 | | | | | | | | | |

Comparing a Gurley value in Comparative Example 1 using a general coating method without pore protection to a Gurley value in each example according to the present invention, wherein pores formed on at least one face of a microporous film were protected using a solvent, it was found that the Gurley value after application of a coating layer in the inventive example is considerably decreased. From this, it can be seen that the multi-layer composite porous film manufactured according to the present invention exhibits superior permeability over the multi-layer composite porous film manufactured by the other method than the present invention.

In addition, with regard to a permeability ratio defined by (a Gurley value after removal of the coating layer)/(a Gurley value of the substrate)x100, it can be seen that the permeability ratio in each Example is considerably lower than the one in Comparative Example. Consequently, it is confirmed that the manufacturing method according to the present invention may effectively prevent a decrease in permeability at an interface between a substrate and a coating layer.

Furthermore, in the case of Example 1 using THF, as a pore protective solvent, which is the same used for the coating solution, the permeability ratio was about 150%. Likewise, Example 2 using MEK as a pore protective solvent, which has low solubility to the polymer resin, exhibits decreased permeability ratio. On the contrary, in Comparative Example 2 using NMP as a pore protective solvent, which has a high solubility to the polymer resin, demonstrates increased permeability ratio. From such results, it can be confirmed that, if the solubility of the pore protective solvent to the polymer resin is lower than that of the solvent used for the coating solution, the pores may be more effectively protected. Meanwhile, in the case of Comparative Example 3, although a solvent having lower solubility to the polymer resin was used as a pore protective solvent, the coating was performed after drying 100% of the solvent filling the pores, thereby exhibiting no effect equal to the present invention. Like the results of the permeability, with regard to the shutdown temperature, results in the Examples were expressed more excellent than those in the Comparative Examples. Specifically, it was confirmed that shutdown temperatures in Examples 2 and 3 using solvents for pore protection with lower solubility than solubility of the polymer resin were considerably decreased.

As is apparent from the foregoing examples, the multi-layer composite porous film manufactured according to the present invention has pores of a substrate protected with a solvent, to thereby effectively prevent the pores from being clogged during application of a coating solution. Consequently, it was identified that the multi-layer composite porous film having excellent permeability and shutdown characteristics can be manufactured.

## Claims

1. A method for manufacturing a multi-layer composite porous film, comprising:
(a) selecting a microporous film substrate;
(b) preparing a coating solution that contains a polymer resin or the polymer resin and inorganic particles;
(c) using a solvent to fill pores on at least one face of the microporous film substrate to protect the same;
(d) applying the coating solution of operation (b) to the microporous film, of which the pores are filled and protected, before drying the solvent filling the pores; and
(e) removing the solvent filling the pores as well as the solvent contained in the coating solution by drying, to thereby form the multi-layer composite porous film having a porous coating layer formed thereon,
wherein the polymer resin is selected from polyarylate and poly(vinylidene difluoride-hexafluoropropylene) and has a melting point of 150°C or higher,
**characterized in that**, when the polymer resin is selected from polyarylate, the solvent for filling the pores in operation (c) is carbon tetrachloride (CCl₄) and the solvent for preparing the coating solution in operation (b) is chloroform; and
when the polymer resin is selected from poly(vinylidene difluoride-hexafluoropropylene), the solvent for filling the pores in operation (c) is selected from tetrahydrofuran (THF) and methylethylketone (MEK), and the solvent for preparing the coating solution in operation (b) is tetrahydrofuran (THF).

2. The method of claim 1, wherein the inorganic particles are one selected from calcium carbonate, alumina, aluminum hydroxide, silica, barium titanium oxide, magnesium oxide, magnesium hydroxide, talc, clay and titanium oxide, or a mixture of two or more thereof.

## Patentansprüche

1. Verfahren zur Herstellung einer mehrschichtigen porösen Verbundfolie, umfassend:
(a) Auswählen eines mikroporösen Filmsubstrats;
(b) Herstellen einer Beschichtungslösung, die ein Polymerharz oder das Polymerharz und anorganische Partikel enthält;
(c) Verwenden eines Lösungsmittels, um Poren auf mindestens einer Seite des mikroporösen Filmsubstrats zu füllen, um dieses zu schützen;
(d) Auftragen der Beschichtungslösung von Schritt (b) auf den mikroporösen Film, dessen Poren gefüllt und geschützt sind, vor dem Trocknen des die Poren füllenden Lösungsmittels; und
(e) Entfernen des die Poren füllenden Lösungsmittels sowie des in der Beschichtungslösung enthaltenen Lösungsmittels durch Trocknen, um dadurch den mehrschichtigen porösen Verbundfilm mit einer darauf ausgebildeten porösen Beschichtungsschicht auszubilden,
wobei das Polymerharz aus Polyarylat und Poly(vinylidendifluoridhexafluorpropylen) ausgewählt ist und einen Schmelzpunkt von 150°C oder höher hat,
**dadurch gekennzeichnet, dass**, wenn das Polymerharz ausgewählt ist aus Polyarylat, das Lösungsmittel zum Füllen der Poren in Schritt (c) Tetrachlorkohlenstoff (CCl₄) ist und das Lösungsmittel zur Herstellung der Beschichtungslösung in Schritt (b) Chloroform ist; und
wenn das Polymerharz ausgewählt ist aus Poly(vinylidendifluoridhexafluorpropylen), das Lösungsmittel zum Füllen der Poren in Schritt (c) ausgewählt ist aus Tetrahydrofuran (THF) und Methylethylketon (MEK), und das Lösungsmittel zum Herstellen der Beschichtungslösung in Schritt (b) Tetrahydrofuran (THF) ist.

2. Verfahren nach Anspruch 1, wobei die anorganischen Partikel ausgewählt sind aus Calciumcarbonat, Aluminiumoxid, Aluminiumhydroxid, Siliciumdioxid, Bariumtitanoxid, Magnesiumoxid, Magnesiumhydroxid, Talk, Ton und Titanoxid, oder einer Mischung aus zwei oder mehr davon.

## Revendications

1. Procédé pour la fabrication d'un film poreux composite multicouche, comprenant :
(a) la sélection d'un substrat de film microporeux ;
(b) la préparation d'une solution de revêtement qui contient une résine polymère ou la résine polymère et des particules inorganiques ;
(c) l'utilisation d'un solvant pour remplir des pores sur au moins une face du substrat de film microporeux pour protéger celui-ci ;
(d) l'application de la solution de revêtement de l'opération (b) sur le film microporeux, dont les pores sont remplis et protégés, avant le séchage du solvant remplissant les pores ; et
(e) l'élimination du solvant remplissant les pores ainsi que du solvant contenu dans la solution de revêtement par séchage, pour ainsi former le film poreux composite multicouche ayant une couche de revêtement poreuse formée sur celui-ci, dans lequel la résine polymère est sélectionnée parmi les polyarylates et le poly(difluorure de vinylidène-hexafluoropropylène) et possède un point de fusion de 150 °C ou supérieur,
**caractérisé en ce que**, lorsque la résine polymère est sélectionnée parmi les polyarylates, le solvant pour le remplissage des pores dans l'opération (c) est le tétrachlorure de carbone (CCl₄) et le solvant pour la préparation de la solution de revêtement dans l'opération (b) est le chloroforme ; et
lorsque la résine polymère est sélectionnée parmi le poly(difluorure de vinylidène-hexafluoropropylène), le solvant pour le remplissage des pores dans l'opération (c) est sélectionné parmi le tétrahydrofurane (THF) et la méthyléthylcétone (MEK), et le solvant pour la préparation de la solution de revêtement dans l'opération (b) est le tétrahydrofurane (THF).

2. Procédé selon la revendication 1, dans lequel les particules inorganiques sont l'un sélectionné parmi le carbonate de calcium, l'alumine, l'hydroxyde d'aluminium, la silice, l'oxyde de baryum-titane, l'oxyde de magnésium, l'hydroxyde de magnésium, le talc, l'argile et l'oxyde de titane, ou un mélange de deux ou plus parmi ceux-ci.
